Europäisches Patentamt

European Patent Office

Office européen des brevets

(11) Veröffentlichungsnummer: **0 027 910**
**B1**

(12) EUROPÄISCHE PATENTSCHRIFT

(45) Veröffentlichungstag der Patentschrift: 04.07.84

(51) Int. Cl.³: **C 02 F 11/14, C 02 F 11/12**

(21) Anmeldenummer: **80105911.4**

(22) Anmeldetag: **30.09.80**

(54) Verfahren zum Auspressen von Klärschlämmen mittels einer Kammerfilterpresse.

(30) Priorität: **03.10.79 DE 2940045**

(43) Veröffentlichungstag der Anmeldung:
**06.05.81 Patentblatt 81/18**

(45) Bekanntmachung des Hinweises auf die Patenterteilung:
**04.07.84 Patentblatt 84/27**

(84) Benannte Vertragsstaaten:
**AT BE CH FR GB IT LI LU NL SE**

(56) Entgegenhaltungen:
**CH - A - 534 639**
**DE - A - 2 750 028**
**DE - B - 1 461 443**
**DE - B - 1 461 452**
**DE - B - 2 656 886**

(73) Patentinhaber: **Kübler, Hans**
**Dietlinger Strasse 93**
**D-7534 Birkenfeld (DE)**

(72) Erfinder: **Kübler, Hans**
**Dietlinger Strasse 93**
**D-7534 Birkenfeld (DE)**

(74) Vertreter: **Lutz, Johannes Dieter, Dr.**
**Tiroler Strasse 15**
**D-7250 Leonberg (DE)**

Courier Press, Leamington Spa, England.

## Beschreibung

Die Erfindung betrifft ein Verfahren zum Auspressen von Klärschlämmen mittels einer Kammerfilterpresse, wonach eine Anlaufphase bzw. die erste Aktivperiode einer Förderpumpe, mit der die Beschickung der Kammerfilterpresse mit Naßschlamm, der mit einem Fällungsmittel versetzt ist, erfolgt, beendet wird, sobald der Druck in den Pressenkammern auf einen vorgegebenen oberen Grenzwert angestiegen ist, und zur weiteren Beschickung der Presse mit Naßschlamm Nachbeschickungs-Preßphasen vorgesehen sind, die in eine Anzahl wiederholter Preßzyklen unterteilt sind, in deren Verlauf die Förderpumpe arbeitet, bis ein vorgebbarer, für die jweilige Preßphase charakteristischer überwachter oberer Grenzwert erreicht ist, und danach stillgesetzt wird, bis der Kammerdruck wieder auf einen niedrigeren und durch einen unteren Grenzwert beschränkten Wert abgesunken ist, wobei jede Nachbeschickungspreßphase, die mit i=1 bis n indiziert sind, durch mindestens einen unteren Grenzwert $g_i$ und einen oberen Grenzwert $G_i$ des Kammerdruckes charakterisiert ist, die bei den einzelnen Preßphasen gesteigert werden.

Ein solches Verfahren ist aus der DE—A— 27 50 028 bekannt.

Bei dem bekannten Verfahren läßt man den Kammerdruck zwischen den einzelnen Pressphasen, innerhalb welcher der Kammerdruck zwischen einem unteren Grenzwert $g_i$ und einem oberen Grenzwert $G_i$ pendelt, auf einen sehr niedrigen Wert (weniger als 0,5 bar) absinken, um eine weitgehende Entspannung des sich in den Kammern der Presse aufbauenden Filterkuchens zu erzielen, bevor die jeweils nächste Pressphase eingeleitet wird, in der dann der Kammerdruck zwischen erhöhten oberen und unteren Grenzwerten pendelt. Durch die mit der nahezu vollständigen Entspannung des Filterkuchens verbundene Auflockerung desselben zwischen den einzelnen Pressphasen wird zwar im Ergebnis ein optimal hoher Trockensubstanz- (TS-)-Gehalt im letztendlich resultierenden Filterkuchen erreicht (55% und mehr), was insbesondere für die Deponierfähigkeit der Filterkuchen und/oder deren weitere Verarbeitung zu Dünger günstig ist; nachteilig an diesem bekannten Verfahren sind jedoch die in Kauf zu nahmen langen Filtrationszeiten, die dadurch zustande kommen, daß mit zunehmendem Füllungsgrad der Pressenkammern auch die Abfallzeiten zunehmen, in denen der Kammerdruck nach dem letztmaligen Erreichen des oberen Druckgrenzwertes $G_i$ am Ende einer Pressphase auf den Minimalwert von ca. 0,2—0,5 bar absinkt, bevor die nächste Pressphase eingeleitet werden kann.

Aufgabe der Erfindung ist es daher, ein mit wechselndem Kammerdruck arbeitendes Verfahren der eingangs genannten Art anzugeben, das insgesamt mit deutlich verminderten Filtrationszeiten auskommt und trotzdem zu Schlammkuchen mit einem TS-Gehalt führt, der allenfalls geringfügig d.h. um allenfalls 2—5 % niedriger ist als ein optimaler Wert von ca. 55%.

Diese Aufgabe wird durch die im kenzeichnenden Teil des Patentanspruchs 1 genannten Merkmale auf einfache Weise gelöst.

Der wesentliche Vorteil des erfindungsgemäßen Verfahrens besteht darin, daß geringfügigen Einbußen von maximal 5% im TS-Gehalt des erzielten Schlammkuchens, die dessen Transport- und Lagerfähigkeit nicht nennenswert beeinträchtigen, drastische Einsparungen an Filtrationszeit gegenüberstehen, die, wie systematische Versuche ergeben haben, ca 30% betragen und in extremen Fällen sogar noch deutlich höher sein können. Im Ergebnis wird daher bei Anwendung des erfindungsgemäßen Verfahrens, bezogen auf die Zeitenheit, ein um ca. 25% höherer Schlammdurchsatz erzielt, was für den wirtschaftlichen Einsatz einer Kammerfilterpresse beispielsweise zur Schlammentwässerung im Rahmen einer kommunalen Kläranlage von erheblicher Bedeutung ist.

Die gemäß Anspruch 2 vorgesehene Zeitverzögerung $\Delta t$, deren Wert im Verlauf der jeweiligen Pressphasen ermittelt werden kann, wirkt sich dahingehend aus, daß der Kammerdruck nach dem letztmaligen Erreichen seines für die vorhergehende Pressphase charakteristischen oberen Grenzwertes im allgemeinen nicht mehr bis auf den für diese vorgesehenen unteren Grenzwert $g_i$ absinkt; sie sollte jedoch ausreichend groß gewählt werden, daß dieser untere Grenzwert $g_i$ wenigstens annähernd erreicht wird, bevor die nächste Pressphase, die auf einem anderen mittleren Druckniveau gefahren wird, eingeleitet wird.

Dies gilt sinngemäß auch für die durch die Merkmale des Anspruchs 3 umrissene Durchführungsart des erfindungsgemäßen verfahrens, die ebenfalls vorab eine experimentelle Ermittlung der geeigneten Verzögerungzeit $\Delta t_i$ voraussetzt. Sie hat unter dem Gesichtspunkt einer automatischen Steuerung des Verfahrensablaufs den Vorzug, daß eine hierzu vorgesehene Druck-Sensor-Einrichtung lediglich auf die für die einzelnen Pressphasen charakteristischen oberen Druckgrenzwerte $G_i$ ansprechen muß und daher mit einfachen Druckschaltern als Druckwächter auskommt.

Auch die durch die Merkmale des Anspruchs 4 angegebene Durchführungsart des erfindungsgemäßen Verfahrens ist mit einfachen Mitteln einer automatischen Durchführung mittels einer einfachen Steuerungsvorrichtung zugänglich, wobei der besondere Vorteil dieser Durchführungsart unter dem Gesichtspunkt des günstigstens Verfahrensablaufs darin liegt, daß sich die je nach Schlammbeschaffenheit erforderliche Presszyklenzahl innerhalb der einzelnen Pressphasen automatisch einstellt und—im Zusammenhang damit—eine geeignete Steuerungsvorrichtung ohne teure Zyklenzähler auskommt.

Wie die eingangs erwähnten, umfangreichen Testversuche ergeben haben, kann es unter dem Gesichtspunkt der Erzielung eines besonders hohen TS-Endgehalts im Filterkuchen vorteilhaft sein, wenn, — in der zeitlichen Reihenfolge der einzelnen Pressphasen gesehen—zwischen solchen mit relativ niedrigem oberen Druck-Grenzwert $G_i$ eine Pressphase vorgesehen ist, bei der der Kammerdruck im Verlauf der einzelnen Presszyklen auf einen deutlich höheren oberen Grenzwert ansteigt und gegebenenfalls der untere Grenzwert des Kammerdruckes noch etwas niedriger gewählt ist als in der nachfolgenden Pressphase. Die nach dieser letztgenannten Durchführungsart des erfindungsgemäßen Verfahrens erzielten End-TS-Gehalte im Filterkuchen stimmten bei Schlämmen mit relativ hohem Ausgangs-TS-Gehalt (ca. 5—6%) innerhalb der Fehlergrenzen von ca. 2% mit nach dem bekannten Verfahren erzielten End-TS-Werten überein, wobei jedoch die Filtrationszeit um ca. 40% niedriger lag als bei Anwendung des bekannten Verfahrens.

Weitere Einzelheiten und Merkmale des erfindungsgemäßen Verfahrens ergeben sich aus der nachfolgenden Beschreibung von Durchführungsbeispielen anhand der Zeichnung. Es zeigen:

Fig. 1 ein Schaubild einer Schlammentwässerungsanlage mit einer nach dem erfindungsgemäßen Verfahren betreibbaren Kammerfilterpresse, in schematischer Darstellung,

Figs. 2—5 die Zeitabhängigkeit des Kammerdruckes in der Kammerfilterpresse gemäß Figur 1 bei einzelnen Durchführungsarten des erfindungsgemäßen Verfahrens und

Figs. 6—9 Stromlaufpläne als Relais-Schaltungen realisierter Ausführungsformen einer Steuerungsvorrichtung zur automatischen Durchführung des anhand der Figuren 2—5 veranschaulichten erfindungsgemäßen Verfahrens.

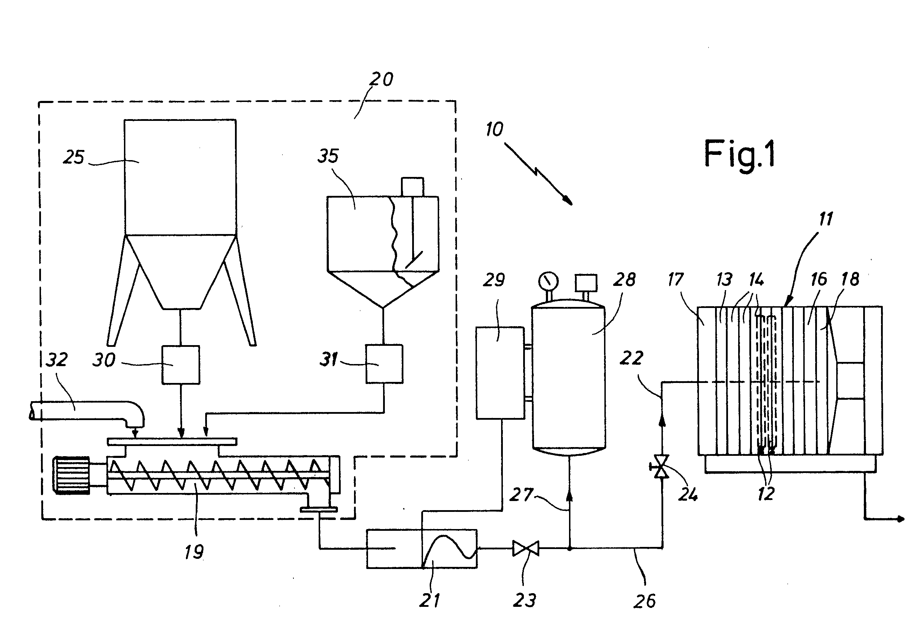

Die in Figur 1 dargestellte Schlammentwässerungsanlage 10 eignet sich insbesondere zur Konditionierung und Entwässerung in üblichen kommunalen Kläranlagen anfallender Klärschlämme, die für die Endablage auf einer Deponie oder zur Weiterverarbeitung zu Kunstdünger auf einen TS-Gehalt von mindestens ca. 50% entwässert werden sollen.

Zentraler Bestandteil der Schlammentwässerungsanlage 10 ist eine übliche Kammerfilterpresse 11, deren gestrichelt angedeutete Presskammern 12 durch je zwei Kamerplatten 13 und 14 bzw. 16 begrenzt sind, die in der aus der Figur 1, auf deren diesbezügliche und weitere Einzelheiten ausdrücklich verwiesen sie, ersichtlichen Anordnung zwischen einem feststehenden Pressentisch 17 und einem beweglichen Pressenkopf 18 in einem Stapel angeordnet sind.

Zur Beschickung der Kammerfilterpresse 11 mit Naßschlamm, der in einer Konditioniereinrichtung 20 mit geeigneten Fällungsmitteln zur Ausfällung gelöster, insbesondere anorganischer Schadstoffe vorbehandelt ist, ist eine Förderpumpe 21 vorgesehen, die beim dargestellten Ausführungsbeispiel als Exzenter-Schneckenpumpe ausgebildet ist; es könnte aber auch eine Kolbenmembranpumpe vorgesehen sein. In der von der Förderpumpe 21 zur Kammerfilterpresse 11 führenden Schlamm-Förderleitung 22 ist ein Rückschlagventil 23 und stromab von diesem ein Schieber 24 vorgesehen. Von dem zwischen dem Rückschlagventil 23 und dem Schieber 24 verlaufenden Förderleitungsabschnitt 26 führt eine Stichleitung 27 zu einem Druckwindkessel 28, der zur Überwachung des Kammerdruckes in den Presskammern 12 mit einer Anzahl von Druckwächtern bestückt ist, die ihrerseits Teil einer Steuerungsvorrichtung 29 sind, die in Abhängigkeit von den überwachten Kammerdruck-Werten eine automatische Steuerung der Aktiv- bzw. Stillstandsphasen der Förderpumpe 21 im Sinne des im folgenden noch näher zu erläuternden Verfahrens vermittelt, nach dem die Kammerfilterpresse betrieben wird. Das Rückschlagventil 23 verhindert einen Rückfluß des Naßschlammes aus der Kammerfilterpresse 11 bzw. dem Druckwindkessel 28 zur Förderpumpe 21. Der Schieber 24 ist vorgesehen, um die Kammerfilterpresse 11 im Zuge gegebenenfalls erforderlicher Wartungsarbeiten gegenüber dem Druckwindkessel 28 bzw. der Förderpumpe 21 absperren zu können.

Die Konditionierung des aus dem Eindicker oder dem Faulraum der im übrigen nicht dargestellten Kläranlage entnommenen Naßschlammes erfolgt, je nach Beschaffenheit dieses Schlammes durch Zugabe von ungelöschtem Kalk (CaO) in einer Menge von ca. 5—10 kg/m³ Naßschlamm/oder einer äquivalenten Kalkhydrat $(Ca(OH)_2)$-Menge oder/und durch Zugabe von Fällungsmitteln wie Eisenchlorid, Aluminiumsulfat und/oder handelsüblicher Flockungsmittel, die mit im Rahmen der Konditioniereinrichtung 20 vorgesehener Dosier-Vorrichtungen 30 bzw. 31 dem über eine Eingangsleitung 32 anfallenden Naßschlamm in der erforderlichen Menge zugegeben werden, wobei ein ebenfalls im Rahmen der Konditioniereinrichtung 20 vorgesehener, als Schneckenförderpumpe ausgebildeter Mischer 19 für die homogene Verteilung der dem Schlamm zugegebenen Stoffe sorgt. Für diese in Pulverform oder in gelöster Form vorliegende Fällungs- und Konditionierungsmittel vorgesehene Vorrats-Silos bzw. Aufbereitungsbehälter sind mit 25 bzw. 35 bezeichnet. Wenn allein mit Kalk oder Kalkhydrat gearbeitet wird und/oder der Naßschlamm einen besonders hohen Feststoffgehalt hat, kann es erforderlich sein, daß auch größere Kalkmengen (bis zu 15 kg/m³) dem Naßschlamm zugesetzt werden.

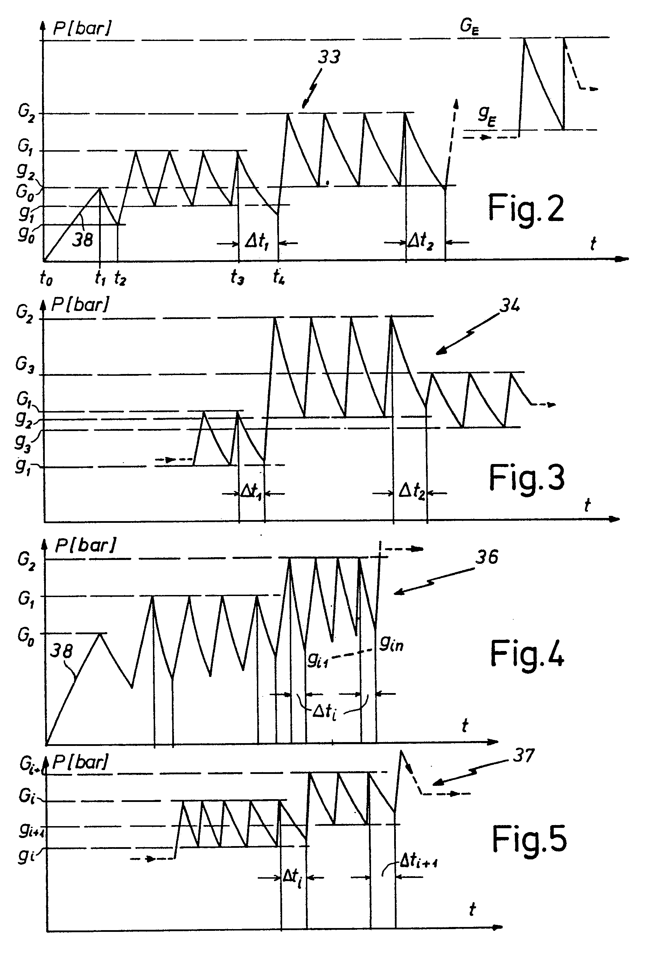

Im folgenden werden anhand der Figuren 2—5 spezielle Durchführungsarten des erfindungsgemäßen Verfahrens erläutert, nach dem die Schlammentwässerungsanlage 10 mit Vorteil betrieben werden kann. Dargestellt ist jeweils der zeitliche Verlauf des Kammerdruckes P, wobei die einzelnen P/t-Diagramme 33, 34, 36 und 37 gemäß den Figuren 2—5 jeweils nur charakteristische Phasen des Entwässerungsvorganges repräsentieren.

Zur Einleitung des Entwässerungsvorganges werde die Förderpumpe 21 im Zeitpunkt $t_0$ eingeschaltet, worauf das Rückschlagventil 23 öffnet und Naßschlamm sowohl in die Kammerfilterpresse 11 als auch in den Druckwindkessel 28 gefördert wird. In dem Maße, wie sich die strömungsmäßig parallel geschalteten Pressenkammern 12 zunehmend mit dem praktisch quantitativ zurückgehaltenen Feststoffanteil des Schlammes füllen, nimmt der Stömungswiderstand der Pressenkammern 12 zu und damit auch der Kammerdruck, gegenden die Förderpumpe 21 arbeiten muß. In demselben Maß nimmt der im Gasraum des Druckwindkessels 28 herrschende Druck zu, so daß durch dessen Überwachung auch der Druck in den Pressenkammern 12 genau überwacht werden kann.

In der durch den ersten Ansteigenden Ast 38 des P/t-Diagramms 33 repräsentierten Analuf-Preßphase nimmt der Stömungswiderstand der Pressenkammern 12 nur langsam zu, solange die Kammern 12 nicht kompaft mit Feststoff angefüllt sind und die sich an den Innenseiten der nicht dergestellten Filtertücher aufbauenden Randschichten noch relativ locker sind und sich noch nicht gegenseitig abstützen. Sobald der Gegendruck einen oberren Grenzwert $G_0$ von ca. 3—4 bar erreicht, was bei einer Förderleistung der Förderpumpe 21 von c. 30 l/min. und einem Kammervolumen von insgesamt 90 l und bei einem TS-Gehalt des Naßschlammes von ca. 3% nach etwa 10—20 Minuten der Fall ist, wird die Förderpumpe 21 abgeschaltet, worauf das unmittelbar stromab von der Förderpumpe 21 angeordnete Rückschlagventil 23 schließt. Vom Zeitpunkt $t_1$ an, in dem die Förderpumpe 21 abgeschaltet worden ist, strömt unter dem Einfluß des nunmehr absinkenden Kammerdruckes weiterhin Filtrat aus der Kammerfilterpresse 11. Es kann davon ausgegangen werden, daß hierdurch eine Auflockerung an den Filtertüchern haftender Feststoffschichten eintritt, die ein nachfolgende Schlammaufnahme begünstigt.

Während des Absinkens des Kammerdruckes findet, abgesehen von einer geringfügigen, den Druckausgleich vermittelnden Nachlieferung von Naßschlamm aus dem Druckwindkessel 28, keine Schlammbeschickung der Kammer-filterpresse statt.

Sobald der Kammerdruck auf einen unteren Grenzwert $g_0$, der ca. 50% des oberen Druck-

grenzwertes $G_0$ beträgt, abgesunken ist, was im Zeitpunkt $t_2$ der Fall seinmöge, wird durch erneutes Einschalten der Förderpumpe 21 die erste Nachbeschickungs-Preßphase eingeleitet. Es ist auch möglich, diese Nachbeschickungs-Preßphase zeitgesteuert mit einer auf den Zeitpunkt $t_1$ des Erreichens des für die Anlauf-Preßphase 38 maßgeblichen Druck-Grenzwertes $G_0$ bezogenen Zeitverzögerung $\Delta t_0$ einzuleiten, deren Dauer experimentell so bestimmt ist, daß der Kammerdruck auf etwa den gewünschten niedrigen Grenzwert $g_0$ absinkt. Die erste Nachbeschickungs-Preßphase umfaßt eine vorgegebene Anzahl von Preßzyklen, innerhalb welcher der Kammerdruck, während die Förderpumpe 21 aktiviert ist, bis auf einen oberen Grenzert $G_1$ ansteigt und hierauf bei abgeschalteter Pumpe bis auf einen unteren Grenzwert $g_1$ abfällt, bei dessen Erreichen bzw. Unterschreiten der nächste Preßzyklus eingeleitet wird. Beim dargestellten Durchführungsbeispiel gemäß Fig. 2 pendelt der Kammerdruck im Verlauf der ersten Nachbeschickungspreßphase zwischen 6 bar als oberem Grenzwert $G_1$ und 3 bar als unterem Grenzwert $g_1$. Wenn im Rahmen einer Preßphase der Kammerdruck zwischen fest vorgegebenen Grenzwerten $G_i$ und $g_i$ pendelt, so nehmen im allgemeinen mit steigender Zyklenzahl die Anstiegszeiten ab, während die für das Abfallen des Kammerdruckes vom oberen auf den unteren Grenzwert benötigten Zeitspannen zunehmen, wobei im Mittel eine Vergrößerung der sich aus Anstiegszeit und Abfallzeit zusammensetzenden Zykluszeit eintritt.

In der auf die erste folgenden zweiten Nachbeschikkungs-Preßphase, die wiederum eine vorgegebene Anzahl von Preßzyklen umfaßt, die denjenigen der ersten Nachbeschickungs-Preßphase analog sind, pendelt der Kammerdruck nunmehr zwischen einem höheren oberen Grenzwert $G_2$ von ca. 8 bar und einem im Vergleich zum Grenzwert $g_1$ ebenfalls erhöhtem unteren Grenzwert $g_2$ von ca. 4 bar, der jedoch niedriger ist als der für die erste Nachbeschickungs-Preßphase maßgebliche obere Grenzwert $G_1$. Die Einleitung des ersten Preßzyklus der zweiten Nachbeschickungs-Preßphase erfolgt bezüglich des Zeitpunktes $t_3$, zu dem im Rahmen der vorhergehenden Preßphase deren oberer Druck-Grenzwert $G_1$ letztmalig erreicht wird, wiederum mit einer Zeitverzögerung $\Delta t_1$, die so bemessen ist, daß der Kammerdruck bis zur Aktivierung der nächsten Preßphase im Zeitpunkt $t_4$ im Normalfall auf etwa den für die erste Nachbeschickkungs-Preßphase charakteristischen unteren Grenzwert $g_1$ abfallen würde. Hierzu kann die Zeitverzögerung $\Delta t_1$ zwischen einem Mittelwert der im Verlauf der vorhergehenden Preßphase beobachteten Abfallzeiten oder der letzten Abfallzeit und dem 1,5-2 fachen dieser Zeitspanne gewählt werden. Je nach Wahl der Verzögerungszeitspanne $\Delta t_1$ wird dann der untere Druckgrenzwert vor dem Einleiten der nächsten Preßphase nicht mehr ganz erreicht oder gegebenenfalls noch etwas unterschritten.

Die Einleitung und Beendigung der weiter vorgesehenen Nachbeschickungs-Preßphasen und der abschließenden End-Preßphase erfolgt ganz analog, wobei für diese Preßphasen lediglich andere Druck-Grenzwerte $G_i$ und $g_i$ und gegebenenfalls andere Werte der sinngemäß ermittelten Vorzögerungszeiten $\Delta t_i$ maßgeblich sind. Die Beendigung der End-Preßphase, in der der Kammerdruck zwischen dem absolut höchsten Druck-Grenzwert $G_E$ von ca. 12 bar und einem unteren Grenzwert $g_E$ von ca. 8 bar pendelt, kann entweder -wie bei den vorhergehenden Preßphasen—nach Ablauf einer erfahrungsgemäß ausreichenden Anzahl von Preßzyklen erfolgen, oder nach Ablauf einer für den Entwässerungsvorgang insgesamt vorgesehenen Zeitspanne, falls innerhalb dieser Zeitspanne eine als ausreichend erkannte Anzahl von Preßzyklen der End-Preßphase bereits abgelaufen sind.

In einem mit kommunalem Klärschlamm—Faulschlamm mit einem 5% igen Feststoffanteil—durchgeführten Testversuch wurde dem Klärschlamm 12 kg CaO/m³ zugesetzt. Der obere Grenzwert $G_0$ des Kammerdruckes betrug in der Anlauf-Preßphase 1,5 bar. Die erste Nachbeschickungs-Preßphase wurde eingeleitet, nachdem der Kammerdruck wieder auf 0,5 bar abgefallen war. Es wurden insgesamt sieben Nachbeschickungs-Preßphasen durchgeführt, in denen die oberen und die unteren Grenzwerte $G_i$ und $g_i$ der für diese Nachbeschickungs-Preßphasen charakteristischen Kammerdrücke schrittweise erhöht wurden. Die auf eine vorausgegangene Nachbeschickungs-Preßphase folgende wurde jeweils eingeleitet, nachdem die für die vorhergegangene Preßphase vorgewählte Zyklenzahl erreicht, das heißt nach dem der Kammerdruck nach der letzten Aktivphase der Förderpumpe 21 wieder auf den unteren Grenzwert $g_i$ der abgelaufenen Nachbeschickungs-Preßphase abgefallen war.

In den sieben Nachbeschickungs-Preßphasen betrugen die oberen Grenzwerte $G_1$, $G_2$, ..., $G_7$ des Kammerdruckes 2,5 bar, 3,5 bar, 5 bar, 7 bar, 9 bar, 11 bar und 12 bar; die zugeodneten unteren Grenzwerte $g_1$ bis $g_7$ betrugen jeweils 1 bar, 2 bar, 3 bar, 5 bar, 6 bar, 7 bar und 9 bar. Die ersten drei Nachbeschickungs-Preßphasen umfaßten jeweils 10 Preßzyklen, die vierte und die fünfte Nachbeschickungs-Preßphasen umfaßten je fünf Preßzyklen und die sechste Nachbeschickungs-Preßphase und die siebte—die End-Preßphase—umfaßten wieder 10 Preßzyklen.

Bei diesem Testversuch ergab sich nach einer Filtrations-Zeit von nur 1,5 Stunden ein Feststoffgehalt im Filterkuchen von 55%.

Die durch das P/t-Diagramm 34 der Figur 3 veranschaulichte Durchführungsart des erfindungsgemäßen Verfahrens unterscheidet sich von derjenigen gemäß Fig. 2 im wesentlichen dadurch, daß die zeitliche Folge der für die einzelnen Nachbeschickungs-Preßphasen maßgeblichen Druck-Grenzwerte $G_i$ und $g_i$ nicht monoton ansteigt, sondern daß für eine "frühe" Nachbeschickungsphase, beispielsweise die zweite Nachbeschickungs-Preßphase ein oberer Grenzwert $G_2$ des Kammerdruckes gewählt ist, der wesentlich höher ist als der für die vorausgegangene erste Nachbeschickungs-Preßphase maßgebliche obere Grenzwert $G_1$ und auch deutlich höher als der für die nachfolgende dritte Nachbeschickungs-Preßphase maßgebliche obere Grenzwert $G_3$, wobei der für die zweite Nachbeschickungs-Preßphase gewählte untere Grenzwert $g_2$ des Kammerdruckes etwas niedriger gewählt ist als der für die erste Nachbeschickungs-Preßphase maßgebliche obere Grenzwert $G_1$ und damit deutlich niedriger als der für die nachfolgende dritte Nachbeschickungs-Preßphase maßgebliche obere Grenzwert $G_3$ des Kammerdruckes. Beim dargestellten Durchführungsbeispiel beträgt der obere Grenzwert $G_2$ ca. 11 bar und ist damit nur um 1 bar niedriger als der für die End-Preßphase gewählte Grenzwert $G_E$ von ca. 12 bar. Der untere Druckgrenzwert $g_2$ beträgt ca. 5,5 bar. Die entsprechenden Werte für die erste bzw. dritte Nachbeschickungs-Preßphase sind 6 und 3 bzw. 8 und 5 bar. Wenn mit derartigen Unterschieden zwischen den oberen Druck-Grenzwerten $G_1$, $G_2$ und $G_3$ und entsprechend gewählten unteren Grenzwerten $g_1$, $g_2$ und $g_3$ gearbeitet wird, können die Nachbeschickungs-Preßphasen mit relativ kurzer Verzögerungszeit $\Delta t_1$ bzw. $\Delta t_2$ gegenüber der jeweils vorhergehenden Preßphase eingeleitet werden, wobei diese Verzögerungszeiten etwa dem Mittelwert der Abfallzeiten der jeweils abgeschlossenen Preßphase entsprechen können.

Bei der durch das P/t-Diagramm 36 der Fig. 4 repräsentierten Durchführungsart des erfindungsgemäßen Verfahrens werden auch die einzelnen Preßzyklen der verschiedenen, aufeinander folgenden Nachbeschickungs-Preßphasen mit einer auf den Zeitpunkt des vorhergehenden Erreichens des für die jeweilige Preßphase charakteristischen oberen Druck-Grenzwertes $G_i$ bezogenen und innerhalb der Preßphase konstanten Zeitverzögerung $\Delta t_i$ eingeleitet. Bei dieser Verfahrensweise steigen die jeweils nach Ablauf der Verzögerungszeit $\Delta t_i$ erreichten niedrigen Druckwerte innerhalb der einzelnen Nachbeschickungs-Preßphasen allmählich an, weil der Strömungswiderstand der Pressenkammern 12 mit zunehmender Feststoffanreicherung zunimmt. Die für die jeweiligen Preßphasen geltenden Verzögerungszeiten $\Delta t_i$ werden dann zweckmäßigerweise so gewählt, daß der Mittelwert der Druckdifferenz zwischen dem jeweiligen oberen Grenzwert $G_i$ und den nach Ablauf der Verzögerungszeit $\Delta t_i$ erreichten niedrigeren Kammerdruckwerte $g_{i1}$, $g_{i2}$ ... $g_{in}$ etwa der Druckdifferenz zwischen dem oberen Druck-Grenzwert $G_i$ und dem unteren Druck-Grenz-

wert $g_i$ entspricht, wenn nach der anhand der Figuren 2 und 3 erläuterten Verfahrensweise vorgegangen würde.

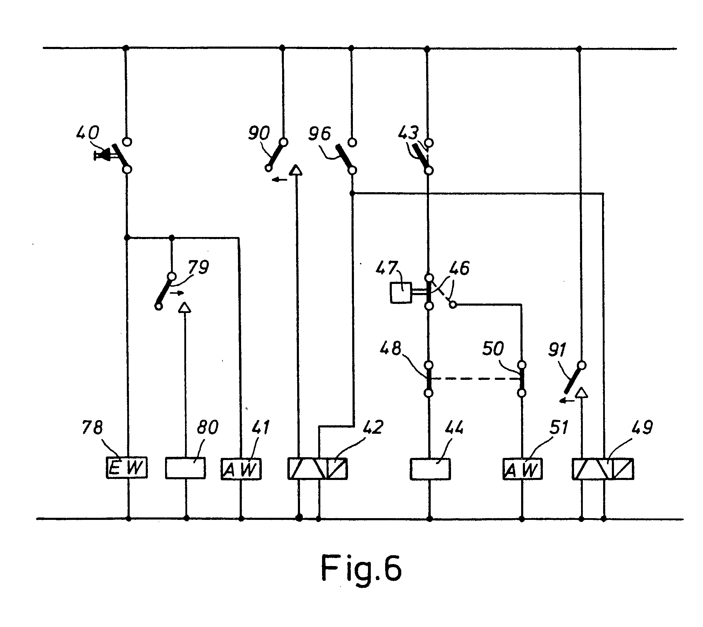

Bei den anhand der Figuren 2—4 geschilderten Verfahrensweisen wird die jeweils nächste Nachbeschickungs-Preßphase eingeleitet, nachdem eine vorbestimmte Zahl von Preßzyklen innerhalb der vorhergehenden Preßphase durchgeführt sind. Im Unterschied dazu wird bei der durch das P/t-Diagramm 37 der Fig. 5 veranschaulichten Verfahrensweise, bei der sich die einzelnen Preßzyklen einer Preßphase wieder zwischen fest vorgegebenen oberen und unteren Druck-Grenzwerten $G_i$ und $g_i$ vollziehen, die jeweils nächste Preßphase dann eingeleitet, sobald die Abfallzeit $\delta t$, die typischerweise von Preßzyklus zu Preßzyklus zunimmt, größer wird als ein für die jeweilige Preßphase vorgegebenes Vergleichszeitintervall $\Delta t_i$.

Die anhand der Fig. 2—5 geschilderten Verfahrensabläufe können mittels einer Vorrichtung automatisch gesteuert werden, die im folgenden anhand der Stromlaufpläne 6—9, auf deren Einzelheiten ausdrücklich verwiesen sei, näher erläutert wird. Die Steuerungsvorrichtung ist beim speziell dargestellten Ausführungsbeispiel als Relaisschaltung ausgebildet, wobei in den Fig. 6—9 jeweils die Ruhestellungen der Relais-Kontakte und der weiteren Schaltelemente dargestellt sind. Die durch den ersten ansteigenden Ast 38 der P/t-Diagramme gemäß den Fig. 2. und 4 repräsentierte Anlauf-Preßphase wird durch Betätigung eines Handtasters 40 eingeleitet, durch dessen Ausschaltimpuls ein Ausschalt-Wischrelais 41 einen Impuls abgibt, durch den ein Remanenzschütz 42 gesetzt wird. Der den Setzimpuls übertragende Kontakt des Wischrelais 41 ist mit 90 bezeichnet.

Über einen darauf schließenden, in die gestrichelt eingezeichnete Lage übergehenden Arbeitskontakt 43 des Remanenzschützes 42 wird die Anlauf-Preßphase eingeleitet. In dieser Anlauf-Preßphase steht die Förderpumpe 21 über ein Relais 44 unter Strom, der außerdem über den in Ruhestellung befindlichen Schaltkontakt 46 eines Differenzdruckwächters 47 und über einen Verriegelungskontakt 48 eines weiteren Remanenzschützes 49 fließt. Der Differenzdruckwächter 47 arbeitet zwischen einem unteren Druck-Grenzwert $g_o$ und einem oberen Druck-Grenzwert $G_o$. Sobald im Verlauf der Anlauf-Preßphase der obere Druck-Grenzwert $G_o$ erreicht wird, geht der Schaltkontakt 46 des Differenzdruckschalters 47 in seine gestrichelt eingezeichnete Arbeitsstellung, worauf nun über einen weiteren Verriegelungskontakt 50 des weiteren Remanenzschützes 49 ein zweites Ausschalt-Wischrelais 51 angesteuert ist. Nach dem Erreichen des oberen Druck-Grenzwertes $G_o$ fällt nach kurzer Zeit der Schaltkontakt 46 des Differenzdruckschalters 47 wieder in seine Ruhestellung zurück. Hierauf gibt das weitere Ausschalt-Wischrelais 51 einen Wischimpuls ab, durch den nunmehr der weitere Remanenzschütz 49 gesetzt wird. Der den Setzimpuls übertragende Kontakt des weiteren Wischrelais 51 ist mit 91 bezeichnet. Im gesetzten Zustand des weiteren Remanenzschützes 49 sind dessen Verriegelungskontakte 48 und 50 offen, wodurch nunmehr die Anlauf-Preßphase "gesperrt" ist und nicht mehr wiederholt werden kann (Fig. 6).

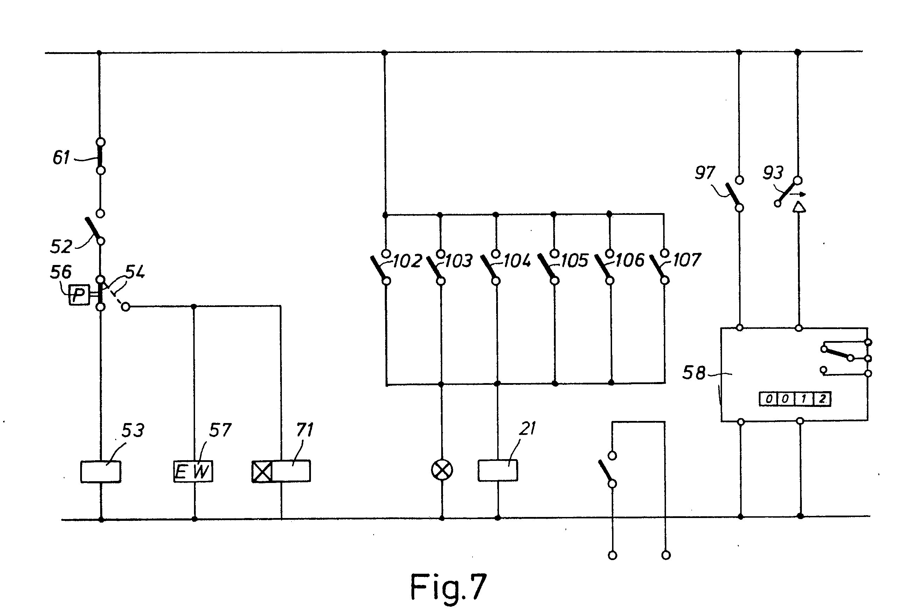

Über einen Schließkontakt 2 (Fig. 7) des weiteren Remanenzschützes 49 (Fig. 6) wird nunmehr die erste Nachbeschickungs-Preßphase aktiviert. Dabei fließt der Steuerstrom eines Schützes 53, über den die Förderpumpe 21 gesteuert wird, über den in Ruhestellung befindlichen Schaltkontakt 54 eines weiteren als Druckwächter eingesetzten Differenzdruckschalters 56, der auf die für die erste Nachbeschickungs-Preßphase charakteristischen unteren und oberen Druckgrenzwerte $g_1$ bzw. $G_1$ eingestellt ist. Sobald der obere Grenzwert $G_1$ des Kammerdruckes erreicht ist, und der Schaltkontakt 54 des Differenzdruckschalters 56 in seine gestrichelt eingezeichete Arbeitsstellung übergeht, wird ein Einschalt-Wischrelais 57 angesteuert, das seinerseits einen Zählimpuls für einen Zyklenzähler 58 abgibt. Der den Zählimpuls übertragende Kontakt des Einschalt-Wischrelais 57 ist mit 93 bezeichnet. Dieser Zyklenzähler 58 ist ein subtrahierender Zähler, der auf eine vorgegebene Anzahl von Preßzyklen eingestellt werden, kann, beispielsweise 12 Preßzyklen.

Die Wirkungsweise der insoweit beschriebenen Steuerungsvorrichtung besteht darin, daß die Förderpumpe 21 aktiviert wird, sobald der untere Grenzwert $g_1$ des Kammerdruckes erreicht bzw. unterschritten wird und daß die Förderpumpe 21 abgeschaltet wird, sobald der obere Grenzwert $G_1$ des Kammerdruckes erreicht wird.

Die Einleitung der nächsten Nachbeschickungs-Preßphase, in der der Kammerdruck zwischen anderen Druck-Grenzwerten $g_2$ bzw. $G_2$ "pendelt", kann nun auf zwei verschiedene Weisen erfolgen:

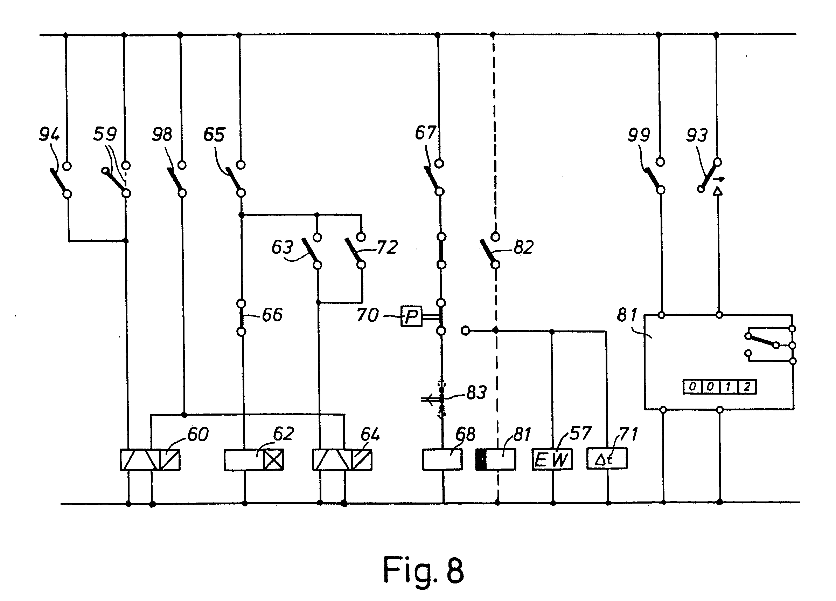

1. Sobald der Zyklenzähler 58 nach Ablauf der vorgesehenen Anzahl von Preßzyklen der ersten Nachbeschickungs-Preßphase den O-Zählerstand erreicht, deht ein Schaltkontakt 59 (Fig. 8) des Zyklenzählers 58 in seine gestrichtelt eingezeichnete Schließstellung über. Dadurch wird wiederum ein Remanenzschütz 60 (Fig. 8) gesetzt, in dessen gesetztem Zustand ein Öffner 61 (Fig. 7) dieses Remanenzschützes 60 offen ist. Dadurch ist die erste Nachbeschickungs-Preßphase "verriegelt" und kann nicht mehr wiederholt werden.

Sobalt der Remanenzschütz 60 (Fig. 8) gesetzt ist, ist über einen Arbeitskontakt 65 des Remanenzschützes 60 ein Zeitrelais 62 aktiviert, das eine vorgebbare Zeitverzögerung vermittelt und nach dieser Zeitverzögerung über einen Schließkontakt 63 einen zweiten Remanenzschütz 64 setzt, der einerseits über seinen Öffner 66 den Steuerstrom des Zeitrelais 62 unterbricht und andererseits über seinen Schließkontakt 67 die zweite Nachbeschikkungs-Preßphase einleitet, in der der Steuerstrom für den die Förderpumpe 21 steuernden Schütz 68 wiederum über den der zweiten Nachbeschickungs-Preßphase zugeordneten Differenzdruckschalter 70 fließt.

Diese Art der Steuerung entspricht dem anhand der Fig. 2 und 3 ersichtlichen Verfahrensablauf.

2. Jedesmal wenn in der vorhergehenden Preßphase der Differenzdruckschalter 56 bzw. 70 (Fig. 7 bzw. 8) bei Erreichen des oberen Druck-Grenzwertes $G_1$ bzw. $G_2$ das Wischrelais 57 ansteuert, wird gleichzeitig auch ein Zeitrelais 71 angesteuert, das auf eine vorgebbare Zeitverzögerung $\Delta t_i$ einstellbar ist. Ist nun die Zeit, die verstreichen würde, bis der Differenzdruckschalter 56 bzw. 70 bei Erreichen des niedrigeren Druck-Grenzwertes $g_1$ bzw. $g_2$ wieder in seine Ruhestellung zurückfallen würde, größer als die vorgegebene Zeitverzögerung $\Delta t_i$, so wird über das Zeitrelais 71 ein Einschaltsignal abgegeben, das den Remanenzschütz 60 (Fig. 8) setzt und dadurch die nächste Nachbeschickungs-Preßphase zeitverzögert einleitet, wobei der Bezugszeitpunkt für die Zeitverzögerung das letztmalige Erreichen des oberen Druck-Grenzwertes $G_1$ bzw. $G_2$ im Verlauf der vorhergehenden Preßphase ist. Der das Einschaltsignal übertragende Schließkontakt des Zeitrelais 71 ist mit 94 bezeichnet.

Wenn die Einleitung der jeweils folgenden Nachbeschickungs-Preßphase über das Zeitrelais 71 erfolgt, so ist die durch das Zeitrelais 62 vermittelte Zeitverzögerung ausgeschaltet, weil dann der Schaltkontakt 63 dieses Zeitrelais 62 durch einen entsprechenden Arbeitskontakt 72 des Zeitrelais 71 überbrückt ist (Fig. 8).

Die solchermaßen arbeitende Steuerungsvorrichtung vermittelt eine automatische Steuerung des Verfahrensablaufs gemäß Fig. 5.

Die Einleitung weiterer Nachbeschickungs-Preßphasen in der einen oder anderen Weise erfolgt ganz analog, wobei für jede dieser Preßphasen die vorgenannten Baueinheiten (Differenzdruckschalter, Remanenzschütze, Zeitrelais, Zyklenzähler und Schütze für die Steuerung der Förderpumpe) gesondert vorgesehen sind.

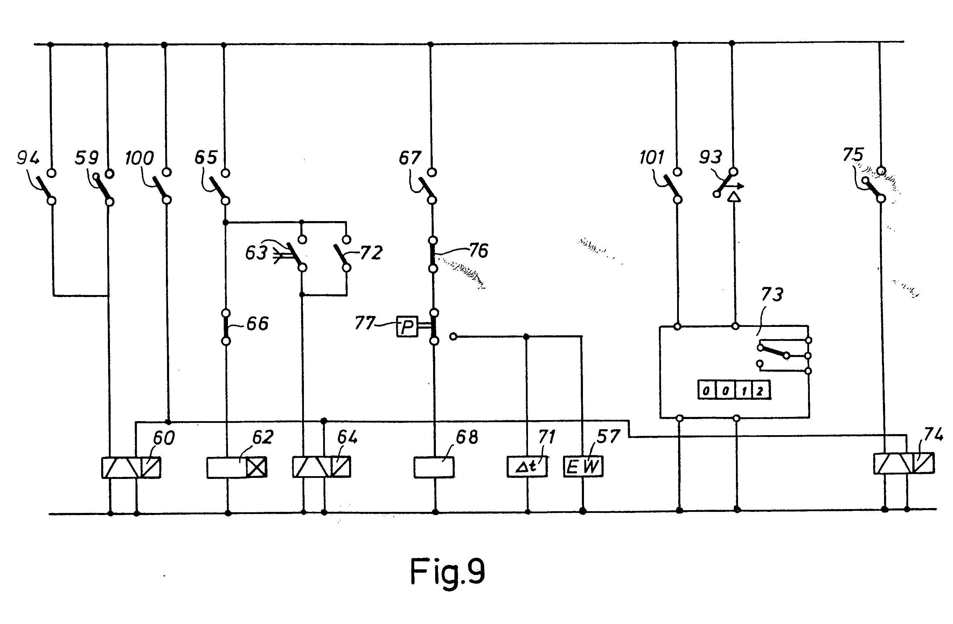

Der Verfahrensablauf wird automatisch beendet, sobald der "letzte" Zyklenzähler 73 (Fig. 9) seinen O-Zählerstand erreicht hat. Dadurch wird über einen Arbeitskontakt 75 des Zyklenzählers 73 ein Remanenzschütz 74 gesetzt, durch dessen Öffner 76 die vorausgegangene End-Preßphase, zu deren Überwachung der Differenz-Druckschalter 77 vorgesehen ist, abschließend verriegelt wird.

Beim erstmaligen Einschalten der Vorrichtung mittels des Handtasters 40 (Fig. 6) wird ein Einschalt-Wischrelais 78 betätigt, über dessen Arbeitskontakt 79 ein Hilfsschütz 80 angesteuert wird, über dessen Kontakte 96 (Fig. 6), 97 (Fig. 7), 98 und 99 (Fig. 8) sowie 100 und 101 (Fig. 9) sämtliche Remanenzschütze in Ruhestellung zurückgesetzt werden und die Zyklenzähler 58 (Fig. 7), 81 (Fig. 8) und 73 (Fig. 9) auf die für den Verfahrensablauf charakteristischen voreingestellten Ausgangswerte gesetzt werden.

Schließlich ist in der Fig. 8 gestrichelt eine Abwandlung der Steuerungsvorrichtung eingezeichnet, die eine automatische Steuerung der durch das P/t-Diagramm 36 gemäß Fig. 4 veranschaulichten Verfahrensweise ermöglicht:

Hierzu ist ein abfallverzögertes Zeitrelais 81 vorgesehen, das jeweils bei Erreichen des Druck-Grenzwertes $G_i$ angesteuert wird. Dieses abfallverzögerte Zeitrelais 81 hat einen selbsthaltenden Schließkontakt 82, der sofort anspricht, und einen nach der vorgegebenen Zeitverzögerung ansprechenden Öffnungskontakt 83, der mit der vorgegebenen Zeitverzögerung $\Delta t_i$ in seine gestrichelt dargestellte Ruhelage zurückfällt. Die Wirkungsweise dieser Schaltungsvariante besteht darin, daß jeweils nach Ablauf der Zeitverzögerung $\Delta t_i$ die Förderpumpe 21 aktiviert wird, unabhängig davon, ob zuvor ein unterer Grenzwert $g_i$ des Kammerdrucks erreicht worden ist oder nicht, und daß die Einleitung der nächsten Nachbeschickungs-Preßphase ausschließlich über den zugeordneten Zyklenzähler eingeleitet wird. Als Druckwächter können hierbei einfache, auf den jeweils oberen Druck-Grenzwert $G_i$ einstellbare Druckschalter eingesetzt werden. Ein insoweit vereinfachte Steuerungsvorrichtung bietet jedenfalls dann die erforderliche Sicherheit, wenn durch eine Definierte Beschaffenheit des auszupressenden Schlammes gewährleistet ist, daß der Kammerdruck, nachdem zuvor der obere Druck-Grenzwert erreicht ist, auch wieder auf hinreichend niedrige Werte in der Größenordnung der genannten unteren Grenzwerte $g_i$ abfallen kann.

In den Fig. 6—9 sind, abgesehen von den Druckwächtern und den Zyklenzählern, für funktionsgleiche Bauelemente und Teile jeweils dieselben Bezugszeichen angegeben.

Über die in Fig. 7 eingezeichneten Relaiskontakte 102—107 ist der Motor der Förderpumpe 21 in den einzelnen Preßphasen eingeschaltet.

## Patentansprüche

1. Verfahren zur Entwässerung von Schlämmen mittels einer Kammerfilterpresse, wonach eine Anlaufphase bzw. die erste Aktivperiode einer Förderpumpe, mit der die Beschickung der Kammerfilterpresse mit Naßschlamm, der mit einem Fällungsmittel versetzt ist, erfolgt, beendet wird, sobald der Druck in den Pressenkammern auf einen vorgegebenen oberen Grenzwert angestiegen ist, und zur weiteren Beschikkung der Presse mit Naßschlamm Nachbeschickungs-Pressphasen vorgesehen sind, die in eine Anzahl wiederholter Preßzyklen unterteilt sind, in deren Verlauf die Förderpumpe arbeitet, bis ein vorgebbarer, für die jeweilige Preßphase charakteristischer überwachter oberer Grenzwert erreicht ist, und danach stillgesetzt wird, bis der Kammerdruck wieder auf einen niedrigeren und durch einen unteren Grenzwert beschränkten Wert abgesunken ist, wobei jede Nachbeschickungs-preßphase, die mit $i=1$ bis n indiziert sind, durch mindestens einen unteren Grenzwert $g_i$ und einen oberen Grenzwert $G_i$ des Kammer-druckes charakterisiert ist, die bei den einzelnen Preßphasen gesteigert werden, dadurch gekennzeichnet, daß mindestens der jeweils erste Preßzyklus der Nachbeschickungs-Preßphasen gegenüber dem Zeitpunkt des letzt-maligen Erreichens des oberen Druckgrenz-wertes $G_i$ in der vorhergehenden Preßphase mit einer Zeitverzögerung $\Delta t_i$ eingeleitet wird, die zwischen einem typischen Wert der innerhalb der vorhergehenden Preßphase für ein Absinken des Kammerdruckes von dem oberen Grenzwert $G_i$ auf den unteren Grenzwert $g_i$ benötigten Zeitspanne und dem doppelten Wert dieser Zeitspanne liegt.

2. Verfahren nach Anspruch 1, dadurch gekennzeichnet, daß die Zeitverzögerung $\Delta t_i$ etwa gleich dem mittleren Wert der im Rahmen der vorhergehenden Preßphase für den Druckabfall von oberen Druckgrenzwert $G_i$ auf den unteren Grenzwert $g_i$ benötigten Zeits-panne gewählt ist.

3. Verfahren nach Anspruch 1 oder Anspruch 2, dadurch abgewandelt, daß auch die einzelnen Preßzyklen der aufeinanderfolgenden Preßphasen mit einer auf den Zeitpunkt des Erreichens des oberen Druckgrenzwertes $G_i$ im vorhergehenden Preßzyklus bezogenen Zeit-verzögerung $\Delta t_i$ eingeleitet werden, deren Dauer etwa dem Mittelwert der aus einer Anzahl aufeinanderfolgender Preßzyklen, bei denen der Kammerdruckjeweils vom oberen auf den unteren Druckgrenzwert absinkt, ermittelten Abfallzeiten entspricht, und daß die nächste Preßphase nach einer für die vorhergehende Preßphase vorgegebenen Zyklenzahl eingeleitet wird.

4. Verfahren nach Anspruch 1 oder Anspruch 2, dadurch gekennzeichnet, daß die für den Abfall des Kammerdruckes von oberen Grenzwert $G_i$ auf den unteren Grenswert $g_i$ benötigte Abfallzeit $\delta t$ mit der fest vorgege-benen Verzögerungszeitspanne $\Delta t_i$ verglichen wird und die nächste Preßphase eingeleitet wird, sobald die Abfallzeit $\delta t$ größer ist als die Verzögerungszeit $\Delta t_i$.

5. Verfahren nach einem der vorhergehenden Ansprüche, dadurch abgewandelt, daß im Anschluß an eine Nachbeschickungs-Preßphase mit relativ niedrigem oberem Druck-Grenzwert $G_i$ eine solche mit einem wesentlich höheren oberen Druck-Grenzwert $G_{i+1}$ und auf

diese wieder eine Preßphase mit einem nie-drigeren oberen Druck-Grenzwert $G_{i+2}$ folgt.

## Revendications

1. Prodédé pour la déshydratation de boues moyennant un filtre-presse à chambres, selon lequel une phase de démarrage ou la première période active d'une pompe de dragage qui amène les boues humides, chargées d'un précipitant, dans un filtre-presse à chambres est terminée dès que la pression dans les chambres est montée à une valeur-seuil prédéfinie et selon lequel des phases de compression de chargements ultérieurs pour l'alimentation ultérieure de la presse avec de la boue humide sont prévues, ces phases étant subdivisées en un nombre de cycles de compression répétés, au cours desquels la pompe travaille jusqu'à ce qu'une valeur-seuil supérieure caractéristique et contrôlée pour la phase de compression adéquate soit atteinte et qui s'arrête ensuite jusqu'à ce que la pression dans les chambres soit descendue à une valeur plus faible et limitée par une valeur-seuil inférieure, chaque phase de compression de chargements ultérieurs avec un indice de $i=1$ à n étant caractérisée par au moins une valeur-seuil inférieure $g_1$ et une valeur-seuil supérieure $G_1$ de la pres-sion dans les chambres et qui augmenteront pour les différentes phases de compression, caractérisé par le fait qu'au moins la premier cycle des phases de compression de chargements ultérieurs est démarré avec un retard de temps $\Delta t_i$ par rapport au moment de la dernière atteinte de la valeur-seuil supérieure de pression $G_1$ dans la phase de compression précédente se trouvant entre une valeur type de la durée nécessaire—pendant la phase de compression précédente—pour une réduction de la pression dans les chambres de la valeur-seuil supérieure $G_i$ à la valeur-seuil inférieure $g_i$ et la double valeur de cette durée.

2. Procédé selon la revendication 1, caractérisé par le fait que le retard de temps $\Delta t_i$ est chosi à peu près similaire à la valeur moyenne de la durée nécessaire dans la phase de compression précédente à la réduction de la pression à partir de la valeur-seuil supérieure $G_i$ à la valeur-seuil inférieure $g_i$.

3. Procédé selon les revendications 1 ou 2, modifié dans ce sens que les différents cycles de compression des phases de compression successives sont également démarrés avec un retard de temps $\Delta t_i$ rapporté à la durée d'atteinte de la valeur-seuil de pression supérieure $G_i$ dans le cycle de compression précédent, retard dont la durée correspond à peu près à la valeur moyenne des durées de réduction d'un certain nombre de cycles de compression successifs pendant lesquels la pression dans les chambres diminue de la valeur-seuil supérieure à la valeur-seuil inférieure, et que la phase de compression suivante est démarrée avec un nombre de cycles prédéfini pour la phase de compression précédente.

4. Procédé selon les revendications 1 ou 2, caractérisé par le fait que le temps $\delta t$ nécessaire à la réduction de la pression dans les chambres de la valeur-seuil supérieure $G_i$ à la valeur-seuil inférieure $g_i$ est comparé avec le temps de retard $\Delta t_i$ prédéfini et que la phase de compression suivante est démarrée, dès que le temps de réduction $\delta t$ est plus grand que le temps de retard $\Delta t_i$.

5. Procédé selon l'une des revendications précédentes, modifié dans ce sens qu'une phase de compression de chargements ultérieurs avec une valeur-seuil de pression supérieure $G_i$ relativement basse est suivie d'une phase avec une valeur-seuil supérieure bien plus élevée $G_{i+1}$ et que celle-ci est suivie d'une phase de compression supérieure moins élevée $G_{i+2}$.

## Claims

1. A method for draining sludges by means of a chamber filter press wherein the initial phase, i.e. the first active period of a delivery pump provided for charging the chamber filter press with wet sludge which is mixed with a precipitant, is terminated when the pressure in the press chambers has reached a predetermined upper threshold value, and wherein recharging press phases are provided for charging the press with further wet sludge, which recharging phases are divided into a number of repeated press cycles during which the delivery pump operates until a presettable controlled upper threshold value characteristic of the respective press phase is reached whereupon the pump is stopped until the pressure in the chamber has again dropped to a lower value defined by a lower threshold value, each of the recharging press phases, which are indicated by i=1 to n, being defined by at least one lower threshold value $g_i$ and one upper threshold value $G_i$ of the chamber pressure, which values increase for the individual press phases, characterised in that at least the first press cycle of each of the recharging press phases is started, relative to the time when the upper threshold value $G_i$ was reached during the preceding press phase, with a time lag $\Delta t_i$ the value of which is to be found between the value typical of the period of time required during the preceding press phase for the drop of the chamber pressure from the upper threshold value $G_i$ to the lower threshold value $g_i$, and twice the value of the said period of time.

2. A method in accordance with claim 1, characterised in that the time lag $\Delta t_i$ is approximately equal to the mean value of the period of time required during the preceding press phase for the pressure drop from the upper threshold value $G_i$ to the lower threshold value $g_i$.

3. A method in accordance with claim 1 or claim 2, modified in that the individual press cycles of the successive press phases are also started, relative to the time when the upper pressure threshold value $G_i$ was reached in the preceding press cycle, with a time lag $\Delta t_i$ corresponding approximately to the mean value of the drop times calculated from a number of successive press cycles in which the chamber pressure dropped from the upper to the lower threshold value, and that the next press phase is started at the end of a preset number of cycles of the preceding press phase.

4. A method in accordance with claim 2 or claim 2, characterised in that the drop time $\delta t$ required for the chamber pressure to drop from the upper threshold value $G_i$ to the lower threshold value $g_i$ is compared with the predetermined time lag $\Delta t_i$ and that the next press phase is started when the drop time $\delta t$ exceeds the time lag $\Delta t_i$.

5. A method in accordance with any of the preceding claims, modified in that a recharging press phase with a relatively low upper pressure threshold value $G_i$ is followed by one with a considerably higher upper threshold value $G_{i+1}$ and that the latter is then again followed by a press phase with a lower upper pressure threshold value $G_{i+2}$.

Fig.1

0 027 910

Fig.2

Fig.3

Fig.4

Fig.5

2

0 027 910

Fig.6

Fig.7

0 027 910

Fig. 8

0 027 910

Fig.9